# FASCICULE DE BREVET EUROPEEN

(11) **EP 2 524 324 B1**
(45) Date de publication et mention de la délivrance du brevet: **24.04.2019**
(21) Numéro de dépôt: 11700527.2
(22) Date de dépôt: 11.01.2011
(51) Int. Cl.: G06F 17/30, G06F 3/048

(54) **PROCEDE DE NAVIGATION PARMI DES IDENTIFICATEURS PLACES DANS DES ZONES ET RECEPTEUR METTANT EN OEUVRE LE PROCEDE**
VERFAHREN ZUR NAVIGATION ZWISCHEN IN ZONEN PLAZIERTE KENNUNGEN UND GERÄT ZUR ANWENDUNG DES VERFAHRENS
METHOD OF NAVIGATION AMONG IDENTIFIERS PLACED IN ZONES AND DEVICE TO IMPLEMENT SUCH METHOD

(30) Priorité: 11.01.2010 FR 1050151
(43) Date de publication de la demande: 21.11.2012
(73) Titulaire: InterDigital Madison Patent Holdings, 75017 Paris (FR)
(72) Inventeur: SIROT, Joel, F-35510 Cesson Sevigne (FR); CHEVALLIER, Louis, F-35510 Cesson Sevigne (FR); VIGOUROUX, Jean-Ronan, F-35510 Cesson Sevigne (FR)
(74) Mandataire: de la Fouchardière, Marie-Noëlle
(86) Numéro de dépôt international: PCT/EP2011/050285
(87) Numéro de publication internationale: WO 2011/083178

(56) Documents cités:
- EP-A2- 1 669 897
- FR-A1- 2 822 261

## Description

L'invention concerne un procédé de navigation parmi des documents affichés sur un écran de visualisation et un récepteur muni d'une interface utilisateur utilisant le procédé.

De nos jours, de nombreux utilisateurs disposent chez eux d'un appareil de reproduction de documents audio ou audiovisuels. Ces documents sont généralement stockés sous forme numérique, soit dans l'appareil lui-même, par exemple dans le disque dur, soit au sein d'un réseau local domestique, soit encore dans une base de données accessible par un réseau public tel qu'Internet. Ces documents peuvent être par exemple des vidéos, des documents audio ou encore des images fixes. Pour accéder à ces documents, l'utilisateur dispose généralement d'une interface assurant l'affichage de l'ensemble de ces documents et la navigation dans cet ensemble. Les documents apparaissent sur l'écran d'un afficheur sous la forme d'un identifiant, ce qui permet à l'utilisateur de survoler l'ensemble des documents accessibles. Les identifiants apparaissent généralement dans des listes incorporées dans des menus. Cet identifiant peut être le titre, ou une image, ou tout autre élément affichable représentatif du document. Dans le cas d'une image utilisée comme identifiant d'un document, cette image peut être un extrait d'un document vidéo, une photo de l'interprète d'un document audio, une partie d'un document photographique, etc.... L'identifiant dit « graphique » est généralement associé avec le document par le producteur dudit document, il peut aussi être défini et associé par l'utilisateur lui-même.

Lorsqu'on souhaite avoir accès à un grand nombre de documents, l'affichage de la liste des identificateurs de ces documents ne permet pas de trouver facilement le document que l'on souhaite afficher. Il importe alors que l'interface utilisateur puisse prendre en compte des données supplémentaires associées à chaque document, pour permettre une classification de ces documents selon certains critères. Ces critères de classification sont par exemple le thème du document, son type, sa durée, sa date de réalisation, l'identité du réalisateur et des principaux acteurs, les mots de son résumé, la note de satisfaction de ce document (ou « rating » en Anglais) ... Ces éléments, dits de haut niveau, que l'on peut aussi appeler des métadonnées (ou metadata en Anglais) sont généralement définis par le producteur. En l'absence de ces éléments, une autre façon de classer les documents peut être basée sur l'analyse directe des signaux de leur composante sonore. Il existe des techniques d'analyse de signal sonore d'un contenu audio qui permettent de calculer des valeurs de paramètres dits « de bas niveaux » de ce contenu. Ces paramètres sont par exemple : le tempo, l'énergie, la brillance, l'enveloppe, ... Ils sont déterminés par analyse du signal soit sous sa forme numérique, soit sous sa forme analogique. Une technique d'indexation de contenu audio est notamment décrite dans l'article « Speech and Language Technologies for audio indexing and retrieval » publié en août 2000 dans la revue IEEE page 1338 à 1353 du volume 88. L'article explique comment, par analyse d'un signal audio, on peut classifier différents contenus sonores. D'autres articles décrivent des moyens de calcul de paramètres de bas niveau et des utilisations possibles ; voici d'autres articles inclus par référence à la présente demande de brevet :
§ B. Feiten and S. Gunzel, Automatic indexing of a Sound Database using self-organizing neural networks, Computer Music Journal, 18 (3°, 1994
§ Eric Scheirer, Music Listening systems, PhD thesis, MIT Media Laboratory, Apr 2000.

Une fois que les paramètres de bas niveaux ont été déterminés pour chaque document sonore d'une collection à classer, on peut classer ces documents en différents groupes en fonction de ces paramètres. Ainsi, les contenus de musique classique peuvent constituer un groupe, de même les morceaux de jazz, un autre groupe, etc ...

Une façon connue de présenter des documents sur un afficheur consiste à utiliser tout ou partie des données de classification disponibles, que ce soit des métadonnées ou des paramètres de bas niveau, pour calculer des coordonnées de localisation d'identificateurs de ces documents sur l'écran de cet afficheur, c'est-à-dire dans un espace à deux dimensions. Les documents sont par exemple représentés sur un afficheur par des points, ce qui permet d'en afficher un grand nombre. En sélectionnant un point sur l'afficheur, l'interface de navigation de cet afficheur fait par exemple apparaître le titre du document associé à ce point, et l'utilisateur peut alors introduire une commande pour lancer la reproduction et/ou l'affichage de ce document en plein écran. Ce type d'interface de navigation peut aussi faire apparaître les similitudes entre les différents documents dont l'identifiant est affiché, par exemple par le fait que la distance entre les points qui les identifient sur l'écran est faible. Ainsi, à l'instar d'un ciel étoilé, on peut voir sur l'écran de l'afficheur des nébuleuses de points indiquant la présence d'un groupe de documents ayant de grandes similitudes. Ces groupes de documents peuvent être identifiés par un élément graphique spécifique de groupes, qui est fourni par l'interface de navigation, ou par le titre d'un document du groupe, typiquement celui dont l'identificateur est placé le plus près de l'équibarycentre des positions des identificateurs du groupe. L'interface de navigation peut également afficher aussi les contours des groupes ainsi que leurs identificateurs.

Cependant, même avec ce type d'interface de navigation, si le nombre de documents est très grand, l'utilisateur peut avoir des difficultés à distinguer un point identifiant un document dans une zone de l'écran où la densité de points est trop importante. Une solution consiste à agrandir cette zone à explorer en effectuant un zoom. Une partie seulement des identifiants des documents est alors affichée. L'utilisateur perd alors la vision d'ensemble des documents disponibles, et le menu affiché ne peut montrer la position d'un identificateur au sein de l'ensemble des documents disponibles.

Il est donc intéressant d'élaborer une interface graphique qui présente des groupes de documents et des commandes de navigation qui permettent de les explorer efficacement.

La demande de brevet FR01/03576 décrit un procédé de navigation dans un ensemble de documents multimédias. Des valeurs numériques sont affectées aux attributs de ces documents, et des coordonnées en sont déduites, de telle sorte que les distances entre les identificateurs affichés relatifs aux documents sont d'autant plus faibles que la similarité entre leurs attributs est grande. Les zones de plus grande densité sont déterminées, ainsi que le centre de ces zones. Des groupes sont formés autour de ces points centraux, de manière à ce que ces groupes contiennent un nombre maximal prédéterminé de documents. Ces groupes, constitués par le groupe du document courant ainsi qu'un certain nombre de groupes périphériques dont la taille est limitée, sont affichés de telles sorte que les groupes périphériques affichés sont ceux qui présentent le plus de similarités avec le groupe du document courant. Il est tenu compte des coordonnées uniquement pour la formation de ces groupes, les coordonnées d'affichage des identifiants affichés n'étant pas celles initialement déduites des attributs des documents.

La demande de brevet EP1669897A2 décrit une méthode de traitement de l'information, consistant à mapper des éléments à des noeuds d'un réseau de noeuds, de telle manière que des éléments similaires soient positionnés de la même manière par rapport à un noeud donné. Des vecteurs de représentation sont représentés pour chaque identifiant d'un document. Des coordonnées x, y sont ensuite générées à partie de ces vecteurs de représentation, et les identificateurs de ces documents sont affichés en fonction de ces coordonnées.

L'invention a pour objet un procédé de navigation sur des documents représentés par des identificateurs affichés sur un menu de navigation, chaque document étant associé à une pluralité de valeurs numériques le caractérisant selon une pluralité de critères, comportant une première étape d'affichage des identificateurs à des positions dépendantes d'une partie des valeurs de paramètres associées à chaque document,
le procédé comporte en outre une étape de détermination d'un nombre déterminé de zones contenant des documents, les sommes des valeurs associées à tous les documents d'une zone et correspondant à un certain nombre de critères sont quasi-égales pour chaque zone ainsi déterminée, une étape d'affichage du contour de chaque zone, et une étape d'introduction d'une commande de sélection d'une zone déclenchant une seconde étape d'affichage en n'affichant que les identificateurs de la zone sélectionnée dans le menu de navigation affiché.

De cette façon, l'utilisateur voit un découpage de l'ensemble des documents en une pluralité de zones, les positions des identificateurs de documents et du contour des zones l'aident pour le choix de la zone à sélectionner pour continuer dans la navigation.

Selon une première variante, chaque zone ainsi déterminée contient le même nombre, à une unité près d'identificateurs, et donc de documents. De cette façon, quelle que soit la première zone sélectionnée à partir du premier menu de navigation, on trouve le même nombre de niveaux de navigation.

Selon une seconde variante, la somme totale des valeurs associées à tous les documents et correspondant à un certain nombre de critères est calculée, et on détermine les zones dont la somme des valeurs associées à tous les documents de ces zones sont quasi-égales à la somme totale divisée par le nombre de zones. De cette façon, chaque zone ainsi déterminée possède la même valeur globale selon les critères qui ont permis le découpage. Si ce critère est la note de satisfaction, chaque zone affichée contient un ensemble de documents qui ont la même note de satisfaction.

Selon une troisième variante, le découpage en zone fait intervenir un profil utilisateur constitué d'une liste d'attributs préférés de l'utilisateur, on élabore pour chaque document une valeur évaluant la corrélation entre les attributs dudit document et les attributs du profil de l'utilisateur. Les sommes des valeurs ainsi calculées pour chaque document présent dans une zone sont quasi-égales pour chacune des zones ainsi déterminées. De cette façon, chaque zone ainsi déterminée offre globalement le même intérêt pour l'utilisateur.

L'invention a également pour objet un appareil électronique comprenant un moyen d'affichage d'un menu de navigation comportant des identificateurs de documents, chaque document étant associé à une pluralité de valeurs numériques le caractérisant selon une pluralité de critères, un moyen d'introduction d'une action d'un utilisateur, le dit moyen permettant de sélectionner une partie du menu de navigation,

L'appareil comporte en outre un moyen de détermination d'un nombre déterminé de zones contenant des identificateurs de documents, les sommes des valeurs associées à tous les documents dont les identificateurs sont situées dans une zone et correspondant à un certain nombre de critères sont quasi-égales pour chaque zone, le moyen d'affichage affichant le contour de chaque zone ainsi déterminée, le moyen d'introduction d'une action d'un utilisateur recevant une commande de sélection d'une zone déclenchant l'affichage d'un menu de navigation qui ne contient que les identificateurs de la zone sélectionnée.

L'invention a également pour objet un procédé de navigation au sein d'un ensemble de documents identifiés par des identificateurs affichés dans un menu de navigation sur un afficheur, chaque document étant associé à une pluralité de valeurs numériques le caractérisant selon une pluralité de critères, le procédé comprenant les étapes suivantes :
- Détermination de la position sur l'afficheur de l'affichage de l'identificateur de chaque document à partir d'une partie des valeurs numériques associées à ce document
- Affichage de l'identificateur de chaque document sur l'afficheur selon cette position déterminée,
- Détermination de zones de l'afficheur regroupant chacune des identificateurs de document,
- Introduction d'une commande de sélection d'une zone déclenchant une étape d'affichage d'un menu de navigation qui ne contient que les identificateurs de cette zone,
la détermination des zones s'effectuant de manière à ce que, dans chaque zone, le nombre de documents dont les identificateurs sont positionnés dans cette zone soit le même à une unité près, le procédé comprenant également une étape d'affichage du contour de chaque zone ainsi déterminée

Grâce à l'invention, chaque zone ainsi déterminée contient le même nombre, à une unité près, d'identificateurs, et donc de documents. L'utilisateur repère immédiatement la zone de documents qui l'intéresse puisque la position des documents dépend des critères connus par l'utilisateur, et peut ensuite naviguer à l'intérieur d'une même zone en sélectionnant la zone qui, de visu, l'intéresse le plus. Le fait de répartir équitablement les documents entre les zones permet en outre de ne pas perdre son temps à chercher des documents dans une zone peu peuplée en documents. Bien que plusieurs répartitions soient possibles, la répartition adoptée, qui est équitable entre les zones à une unité près, est celle qui est optimale de ce point de vue : son choix est donc motivé et n'a rien d'arbitraire.

Selon une variante, les valeurs numériques prises en compte pour élaborer la position des identificateurs au sein du menu de navigation sont différentes de celles utilisées par l'étape de détermination des zones.

Selon une autre variante, le procédé de navigation comporte une pluralité d'étapes successives d'introduction d'une commande de sélection d'une zone.

Ainsi, l'utilisateur peut, par l'introduction successive de plusieurs commandes de sélection, trouver le document qui l'intéresse parmi une masse de documents initiaux affichés. Cette manière de naviguer est très intuitive, puisque c'est la position du document qui le renseigne sur la pertinence du document. Comme elle est intuitive, n'importe qui peut assimiler cette manière de naviguer avec très peu d'efforts, notamment les personnes que l'informatique rebute. De plus, l'utilisateur non seulement s'y adapte très vite, mais en plus, peut naviguer extrêmement rapidement dans une masse de documents initiaux affichés en un temps négligeable. Si par exemple, on fait le choix de diviser par dix le nombre de documents à chaque introduction d'une commande de sélection, en partant de cent documents, on arrive à un document pertinent après avoir introduit seulement deux commandes de sélection successives, l'utilisateur n'ayant jamais eu à choisir parmi plus de dix zones affichées.

Selon une autre variante, lorsque chaque zone du menu de navigation affiché contient au plus un identificateur de document, alors l'introduction d'une commande de sélection d'une zone entraîne la reproduction du document identifié par l'identificateur présent dans ladite zone.

Ainsi, étant arrivé au document ultime, l'utilisateur a la possibilité de le reproduire par la simple introduction d'une commande de sélection. La zone, qui occupe une surface sur l'afficheur bien plus importante que celle de l'identificateur, est plus facile à sélectionner, et donc également plus rapide à sélectionner.

Avantageusement, le procédé de navigation selon l'invention comporte également les étapes suivantes:
- Elaboration d'un profil de l'utilisateur consistant à créer une liste d'attributs préférés de l'utilisateur,
- détermination d'une pluralité d'attributs associés à chaque document, incluant la partie des valeurs numériques caractérisant ce document,
- dans chacune des zones, détermination du document présentant la plus forte corrélation entre les attributs associés à ce document et les attributs du profil d'utilisateur,
- Identification sur l'afficheur de chaque zone par l'affichage d'un identificateur du document présentant la plus forte corrélation

De cette manière, chaque zone devient plus facilement repérable grâce à l'affichage de cet identificateur supplémentaire. De plus, cet identificateur supplémentaire, représentant une zone, est celui du document censé présenter le plus d'intérêt pour l'utilisateur. Ainsi, l'utilisateur voit tout de suite si cette zone présente un intérêt pour lui en particulier. L'invention a également pour objet un appareil électronique comprenant un moyen d'affichage d'un menu de navigation comportant des identificateurs de documents, chaque document étant associé à une pluralité de valeurs numériques le caractérisant selon une pluralité de critères, un moyen d'introduction d'une action d'un utilisateur recevant une commande de sélection d'une zone déclenchant l'affichage d'un menu de navigation qui ne contient que les identificateurs de la zone sélectionnée, ce moyen permettant de sélectionner une partie du menu de navigation, un moyen de détermination de zones de l'afficheur regroupant chacune des identificateurs de document, le moyen de détermination des zones déterminant ces zones de manière à ce que, dans chaque zone, le nombre de documents dont les identificateurs sont positionnés dans cette zone soit le même à une unité près, le moyen d'affichage affichant le contour de chaque zone ainsi déterminée.

D'autres caractéristiques et avantages de l'invention apparaîtront maintenant avec plus de détails dans le cadre de la description qui suit d'exemples de réalisation donnés à titre illustratif en se référant aux figures annexées qui représentent :

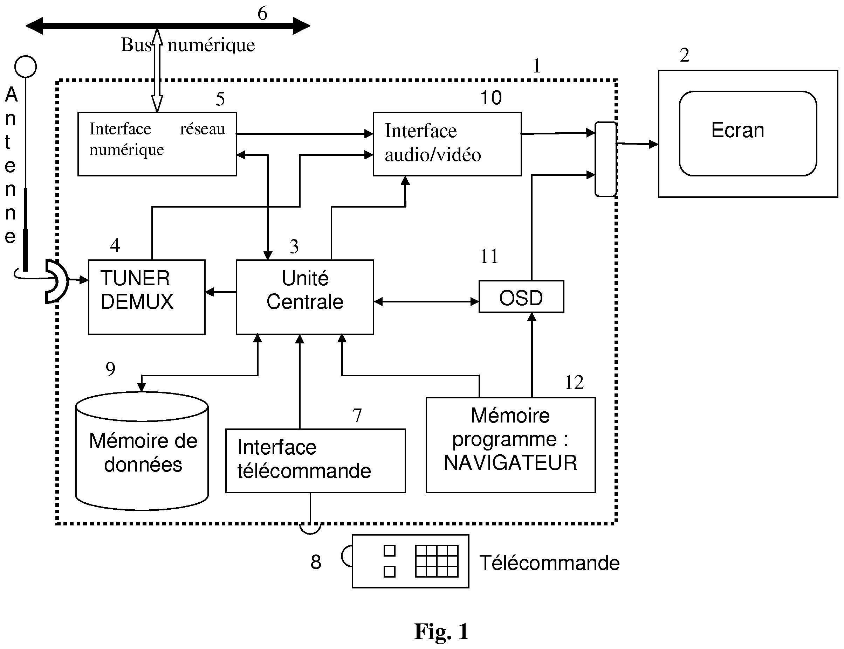

- la figure 1 est un diagramme bloc d'un récepteur multimédia pour la mise en oeuvre d'un exemple de réalisation de l'invention,
- la figure 2 est un tableau associant pour chaque document de la collection ses valeurs de paramètres de bas niveau,
- la figure 3 montre un exemple d'ordinogramme des principales étapes du procédé selon un exemple de réalisation de l'invention,
- la figure 4 présente un exemple d'un menu de navigation selon une première variante de réalisation de l'invention,
- la figure 5 présente un exemple d'un menu de navigation selon une seconde variante de réalisation de l'invention,
- la figure 6 présente un exemple d'un menu de navigation selon une troisième variante de réalisation de l'invention qui fait intervenir le profil de l'utilisateur.

Selon un exemple de réalisation de l'invention, On décrit tout d'abord la structure d'un appareil de réception, ici un récepteur multimédia 1, qui est connecté à un dispositif d'affichage, ici un écran de télévision 2. Cet appareil de réception peut être un ordinateur avec ou sans un écran d'affichage intégré, et doté d'un logiciel de stockage de document et de navigation au sein de ces documents. D'autres appareils de réception sont également envisageables et s'appliquent à la présente invention, par exemple un PVR ou tout appareil capable d'accéder à des contenus audio ou audiovisuels et disposant de moyens de création et d'affichage de menus. Le récepteur multimédia 1 comprend une unité centrale 3 reliée à une mémoire de programme 12, et une interface 5 pour la communication avec un bus numérique à haut débit 6 permettant de transmettre des données audio et/ou vidéo en temps réel. Ce réseau permet d'accéder à des serveurs distants, le plus courant est le réseau IP. Le récepteur peut également recevoir des données audio et/ou vidéo d'un réseau de diffusion à travers une antenne de réception associée à un démodulateur 4. Le récepteur multimédia 1 comprend en outre un récepteur de signaux infrarouges 7 pour recevoir les signaux d'une télécommande 8, une mémoire 9 pour le stockage de contenus audiovisuels et d'une base de données, et une logique de décodage audio/vidéo 10 pour la génération des signaux audiovisuels envoyés à l'écran de télévision 2. La télécommande 8 est par exemple de type « Gyration ». Elle est dotée de gyroscopes de façon à transformer le mouvement dans l'espace en un signal. En déplaçant sa télécommande à gauche, à droite, en haut ou en bas, ainsi que d'avant en arrière, l'utilisateur déplace un curseur sur l'écran, comme il le ferait avec une souris d'ordinateur en la déplaçant sur le tapis. Ce type de télécommande est particulièrement avantageux si le menu de navigation est affiché en trois dimensions. Quel que soit son type, la télécommande comporte au moins une touche de fonctions telles que « OK » dont nous verrons plus tard la fonction. La mémoire 9 est avantageusement un disque dur de plusieurs centaines de méga-octets, permettant d'enregistrer plusieurs heures au moins de contenus audiovisuels. Ces contenus audiovisuels sont identifiés par un titre enregistré et/ou une ou plusieurs imagettes qui sont stockés dans la base de données. Comme décrit ci-après, Ce sont ces imagettes qui seront affichées par l'interface utilisateur sur l'écran de télévision 2.

Le récepteur comprend également un circuit 11 d'affichage de données sur l'écran de télévision 2, appelé souvent circuit OSD, de l'Anglais "On Screen Display" (signifiant littéralement "affichage sur l'écran"). Le circuit OSD 11 est un générateur de texte et de graphisme qui permet d'afficher à l'écran des menus, des pictogrammes (par exemple, un numéro correspondant à la chaîne visualisée) et qui permet d'afficher les menus de navigation conformément à la présente invention, et notamment une ou plusieurs barres de boutons de commande. Le circuit OSD 11 est contrôlé par l'Unité Centrale 3 et un programme appelé module de navigation enregistré dans la mémoire 12. Le module de navigation est avantageusement réalisé sous la forme d'un programme exécutable enregistré dans une mémoire morte ou téléchargé d'un réseau. Il peut aussi être réalisé sous la forme d'un circuit spécialisé de type ASIC par exemple.

Le bus numérique 6 et/ou le réseau de diffusion transmettent au récepteur des données comprenant des contenus multimédias et des données descriptives ou « attributs » de ces contenus. Ces données dites de haut niveau proviennent soit d'un réseau de diffusion, soit du réseau numérique 6. Les données descriptives comprennent des éléments de classification des contenus multimédias, appelés généralement « attributs ». Les données descriptives dites de haut niveau sont par exemple des méta-données (ou « metadata » en Anglais) définies selon le standard MPEG7, et/ou par exemple le titre ou une image identifiant le document associé. Si ces données ne sont pas numériques, un système de codification permet d'attribuer une valeur numérique à chaque donnée.

D'autres données de classifications existent, par exemple selon le standard IMDB (de l'acronyme : Internet Movie DataBase », des données de thèmes , notamment pour la classification de films comme illustré au tableau 1.

**Tableau 1**

| Action | Adventure | Animation | Biography | Comedy | Crime | Documentary |
|---|---|---|---|---|---|---|
| Drama | Family | Fantasy | Film-Noir | Game-Show | History | Horror |
| Music | Musical | Mystery | News | Reality-TV | Romance | Sci-Fi |
| Short | Sport | Talk-Show | Thriller | War | Western | |

Ces données descriptives sont soit stockées dans la base de données de la mémoire 9 du récepteur et mises à jour, soit mémorisées dans une base de données mémorisée par un serveur distant et constamment accessibles par le récepteur 1. Le module de navigation extrait ensuite les informations de cette base de données et les traite pour réaliser les menus de navigation affichés à l'écran.

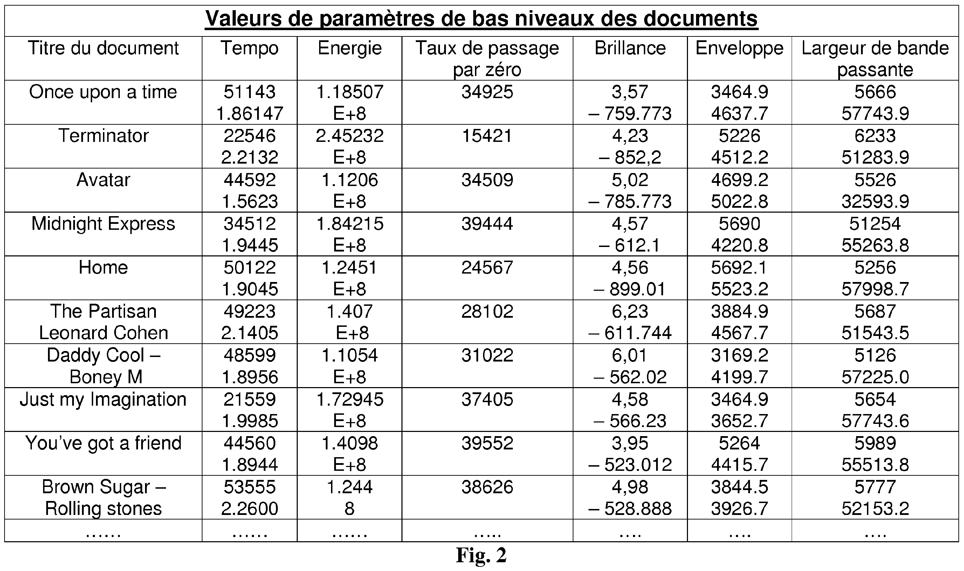

Selon un exemple de réalisation, les données descriptives ou « attributs » des documents utilisés pour le placement des identificateurs dans le menu de navigation affiché sur l'écran de télévision 2 sont extraits de la composante sonore des documents. Comme nous l'avons indiqué en préambule, il existe de nombreuses techniques d'analyse de la composante sonore afin d'élaborer des données descriptives de bas niveaux. Les données descriptives ou « attributs » associés aux documents sont écrits dans des tableaux de descripteurs numériques. Le nombre des éléments d'un descripteur est de l'ordre de quelques dizaines. Un exemple d'un tableau de descripteurs sonore de bas niveaux est illustré par la figure 2. La première colonne du tableau présente le titre du contenu audio qui sert d'identificateur. Les colonnes suivantes présentent les valeurs de données descriptives de bas niveau associés au document, tels que l'intensité sonore moyenne, le tempo, l'énergie, le taux de passage par zéro (ou « zerocrossing » en Anglais), la brillance (ou « brightness » en Anglais), l'enveloppe, la largeur de bande passante (« bandwidth » en Anglais »), le « Loundness », les coefficients cepstraux.....

Ces données descriptives de bas niveaux peuvent être élaborées par le récepteur multimédia 1. Selon une variante, les données descriptives sont transmises sous forme numérique avec le document. Dans ce cas, les données descriptives de bas niveaux associées constituant un champ attaché au document transmis. Cette solution est particulièrement avantageuse car le calcul des données descriptives est effectué par le producteur ou le fournisseur de contenu et non par l'utilisateur, de ce fait il est réalisé qu'une seule fois.

Qu'ils soient téléchargés ou calculés localement, les données descriptives de bas niveaux sont utilisés pour déterminer la position des identificateurs des documents associés. Une façon de faire consiste à positionner des points Pi identifiant chaque document dans un espace multidimensionnel comprenant autant de dimensions que les documents possèdent de paramètres de bas niveau.

Pour déterminer la position des identificateurs sur l'écran de télévision 2, on peut utiliser ensuite une projection des données descriptives sur un espace à deux dimensions. Les coordonnées (xi, yi) de chaque point sont obtenues par projection du point Pi sur un espace de dimension 2. La projection est déterminée par analyse en composantes principales ou ACP. L'ACP est notamment décrit dans le document Saporta 1990, intitulé « Probabilités Analyse de données et statistiques, Edition Technip. » Cet algorithme d'analyse de données bien connu cherche à découvrir un sous-système d'axes lié linéairement à l'original qui « étale » au mieux les échantillons, ces axes tendent à confondre les axes originaux corrélés. Les données descriptives de bas niveau étant supposées avoir une cohérence perceptible (on peut percevoir les sons proches si et seulement si les valeurs des descripteurs de bas niveau sont proches), et la projection sur l'espace à deux dimensions étant continue, les documents associés à des points qui sont proches les uns des autres dans cet espace à deux dimensions se ressemblent au moins sur le plan sonore. A noter que, dans le cas de l'utilisation un afficheur permettant d'afficher des images 3D, on peut appliquer la même technique à un espace de dimension 3.

Dans ce qui a été décrit précédemment, des données descriptives de bas niveaux élaborées par le récepteur multimédia 1 pour les documents sont utilisés pour le placement des identifiants de ces documents, ce qui convient très bien aux documents sonores. Si le module de navigation présente des documents audiovisuels, l'analyse des sons est d'un intérêt limité. Il est préférable dans ce cas d'utiliser des données descriptives de haut niveau qui sont reçus par le récepteur multimédia 1 et associés aux documents. Si le module de navigation présente des documents audio et audiovisuels, il importe de choisir des critères communs pour le placement des identificateurs de ces deux types de documents sur l'écran de télévision 2. Si les données descriptives ou attributs des documents ne sont pas numériques, un système de codification permet de leur attribuer une valeur numérique.

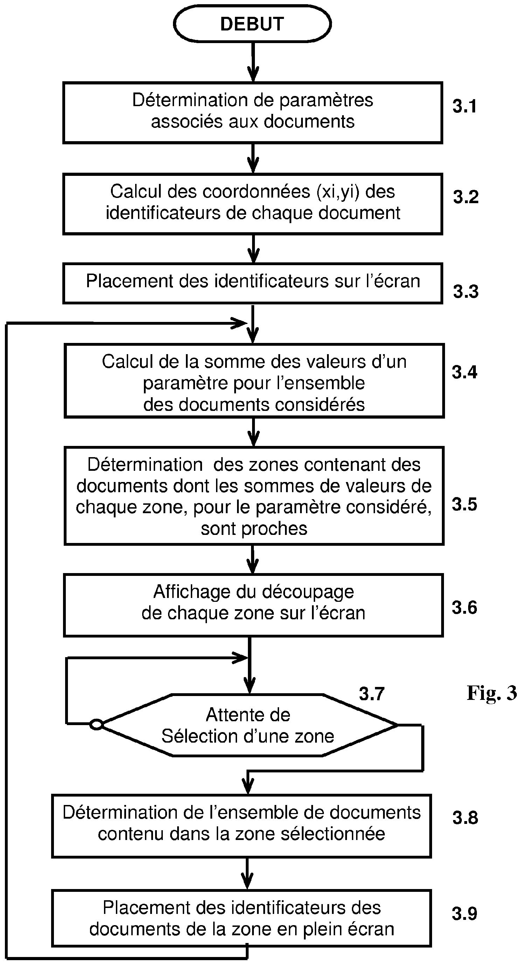

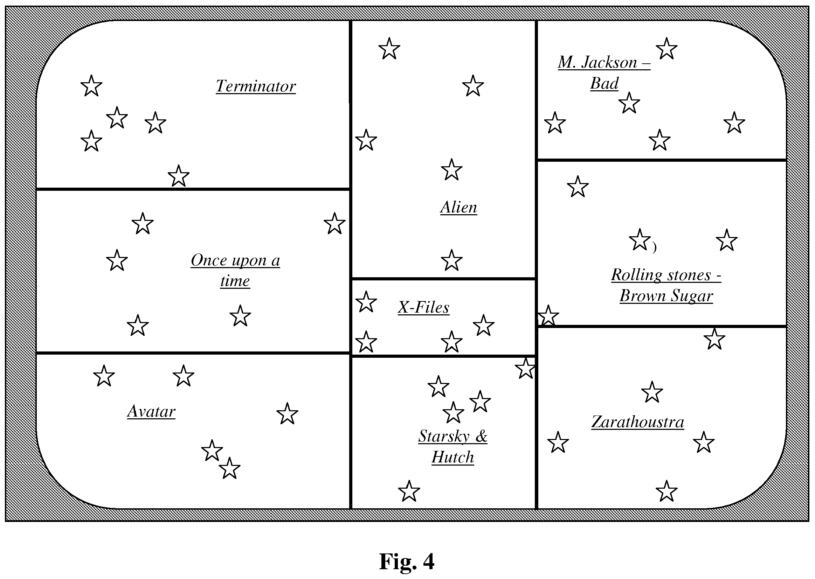

Nous allons maintenant détailler avec l'ordinogramme de la figure 3 et les apparences d'écran des figures 4, 5 et 6, les différentes étapes de la méthode de navigation.

A l'étape 3.1, le module de navigation rassemble les données descriptives déjà disponibles associées aux documents et détermine les données descriptives de bas niveau, notamment ceux provenant de l'analyse du contenu sonore du document. Puis, le module de navigation utilise une partie au moins de ces données descriptives pour calculer des coordonnées (xi,yi) des identificateurs associés à chaque document (étape 3.2). A l'étape 3.3, l'ensemble des identificateurs de chaque document est placés sur le menu de navigation de l'écran de télévision 2 selon ses coordonnées calculées. Ces identificateurs sont des symboles graphiques tels que des points, des croix, des étoiles, .... Lorsque les identifiants de deux documents sont proches sur l'écran de télévision 2, cela signifie qu'il existe des similitudes entre ces documents, au moins sur le plan sonore. L'utilisateur déplace un index à l'aide de la souris ou de la télécommande et le positionne sur l'identificateur. Une fenêtre contenant le titre du document apparaît alors. Si ce document est bien celui souhaité, l'utilisateur lance sa reproduction en appuyant sur la touche « OK ».

Lorsque le nombre d'identificateurs est important, les identificateurs apparaissent dans des amas compacts. A l'aide d'un index graphique se déplaçant avec une souris ou par la télécommande, il est difficile de sélectionner individuellement un identificateur. Selon l'invention, le module de navigation définit des zones que l'utilisateur peut sélectionner déclenchant alors un agrandissement de la zone sur une partie au moins du menu affiché. La présente invention décrit une façon originale de découper le menu présentant les identificateurs en un nombre déterminé de zones.

Dans un premier temps, à l'étape 3.4, le module de navigation prend en compte pour l'ensemble des documents, toutes les valeurs d'une des données descriptives et les additionne pour calculer la somme des valeurs pour cet ensemble. Selon un aspect important de l'invention, le nombre de zones dans les menus de navigation est constant. Les exemples illustrés par les figures montrent un découpage en neuf zones. Le module de navigation détermine graphiquement neuf zones contenant des sous-ensembles de documents dont la somme des valeurs de l'une des données descriptives est égale à un neuvième de la somme des valeurs de l'ensemble, à quelques unités près. Avantageusement, chaque zone ainsi déterminée possède approximativement le même poids.

Plusieurs variantes existent pour déterminer graphiquement les neuf sous-zones à l'étape 2.6. Selon une première variante particulièrement simple, la donnée descriptive prise en compte est le nombre de documents par sous-zone. Le module de navigation détermine neuf sous-zones contenant à une unité près, le même nombre d'identificateurs. La figure 4 illustre cette variante. Selon l'exemple illustré, 43 identificateurs sont affichés sous la forme d'étoiles. Dans un premier temps, le module découpe le menu en trois zones contenant 14 ou 15 identificateurs. Le module définit alors la position des deux traits verticaux divisant le menu en trois parties. Puis, dans chaque partie, le module divise de nouveau en trois par des traits horizontaux. A l'issue de cette opération, le menu affiche neuf zones ayant 4 ou 5 éléments. Cette façon de découper est particulièrement simple à mettre en oeuvre. De plus, elle permet de répartir équitablement les documents dans les zones de sorte que si des niveaux d'arborescence sont appliqués à la navigation, il existe le même nombre de niveaux quelle que soit la zone sélectionnée au niveau du menu de départ.

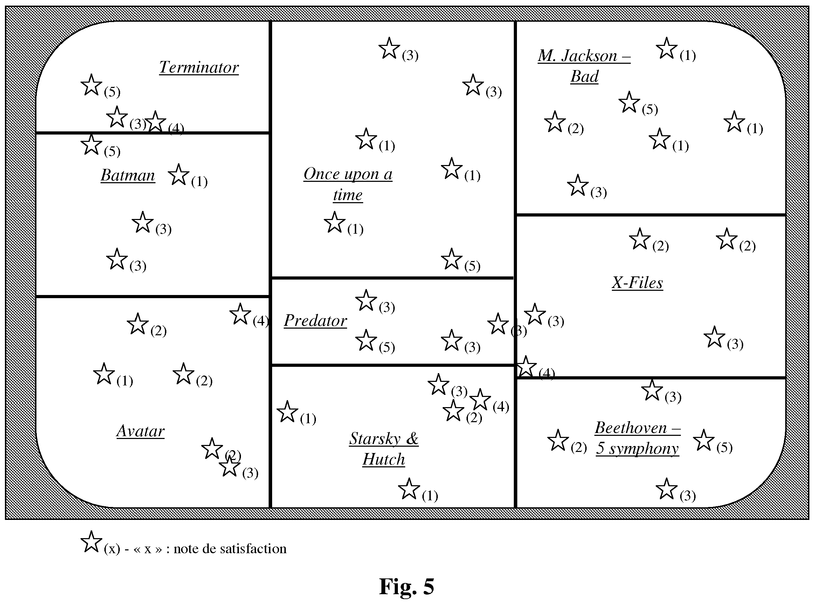

Selon une seconde variante de réalisation, le découpage s'effectue en prenant en compte la valeur d'une métadonnée descriptive, telle que la note de satisfaction du document. La note de satisfaction est une information élaborée par le producteur qui représente l'intérêt d'un grand groupe de personnes envers ce document. Typiquement, cette note est élaborée à partir d'informations telles que : le nombre de personnes ayant vu le film, le nombre de salles reproduisant le document, le chiffre d'affaire, l'évaluation faite par les critères littéraires, etc. Dans l'exemple illustré par la figure 5, on a indiqué la note de satisfaction de chaque document par un chiffre variant de 1 à 5 placé à côté de l'identificateur du document associé, en temps normal, cette valeur n'apparaît pas à l'écran. Le découpage s'effectue de la même manière que lors de la première variante. Le module de navigation calcule la somme de toutes les notes de satisfaction, dans le cas présent, la somme est égale à 117. Puis le module découpe en trois zones contenant les identificateurs de trois groupes de documents, la somme des notes de satisfaction de chaque document de chaque groupe étant à quelques unités près égales à 117 / 3 = 39. Puis, chaque groupe est lui-même divisé en trois, la somme des notes de satisfaction de chaque document de chaque sous-groupe étant à quelques unités près, égales à 39 / 3 = 13. Le découpage est différent du celui de la première variante. En effet, on peut trouver dans une petite zone un petite nombre de documents très connus et appréciés de tous, et à coté une grande zone contenant beaucoup plus de documents mais peu apprécié du public. Ce découpage permet que chaque zone sélectionnée au niveau du menu de départ offre globalement le même intérêt.

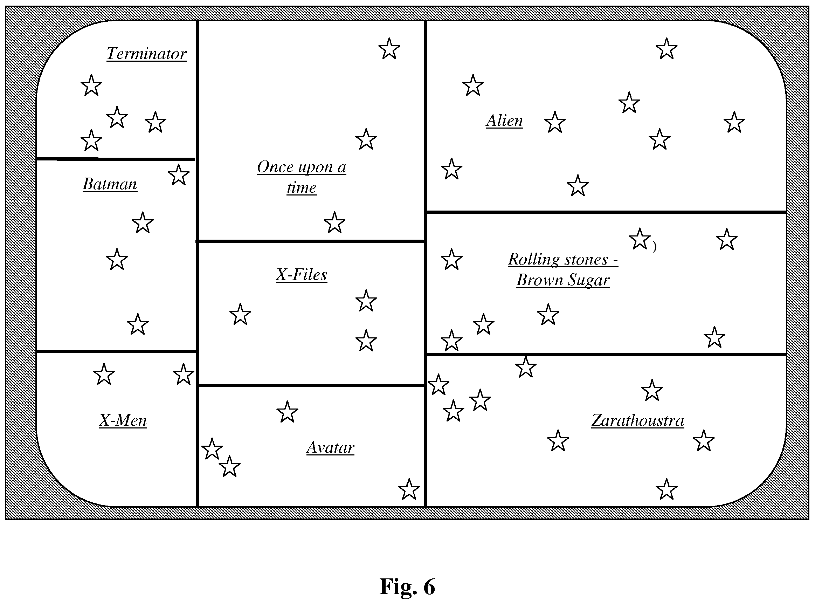

Selon une troisième variante de réalisation, le découpage s'effectue en prenant en compte un profil de l'utilisateur et en corrélant les métadonnées descriptives de chaque document avec ledit profil. Cette variante est illustrée par la figure 6. Un profil utilisateur est une liste d'attributs extraits des mêmes critères de classification caractérisant les documents. Un profil peut être introduit manuellement, par exemple on présente à l'utilisateur pour le critère « thème » la liste : « romantique, action, historique, documentaire, érotique, sport » et il choisit celui qui l'attire le plus. Il est aussi possible de créer automatiquement les données d'un profil en analysant le comportement de l'utilisateur à partir de ses choix de programmes. Selon cette variante, le module de navigation extrait les métadonnées descriptives ou « attribut » de chaque document et les compare pour le même critère de classification avec les attributs du profil. Chaque fois qu'une métadonnée descriptive ou « attribut » d'un document correspond à un attribut du profil de l'utilisateur, un compteur est incrémenté, et on obtient ainsi une valeur exprimant l'intérêt de l'utilisateur pour ce document. Une fois l'ensemble des documents analysés et une fois déterminé l'intérêt de l'utilisateur pour chaque document, de la même manière que précédemment, le module de navigation totalise les valeurs des intérêts de l'utilisateur. Puis, il découpe dans un premier temps en trois zones contenant les identificateurs de trois groupes de documents, la somme des valeurs exprimant l'intérêt de l'utilisateur de chaque document de chaque groupe étant égale, à quelques unités près. Puis, chaque groupe est lui-même divisé en trois, la somme des valeurs exprimant l'intérêt de l'utilisateur de chaque document de chaque sous-groupe étant égale, à quelques unités près. Cette troisième variante produit un troisième découpage différent des deux premiers. Ce troisième découpage permet que chaque zone sélectionné au niveau du menu de départ offre globalement le même intérêt pour l'utilisateur.

Quelque soit la variante utilisée pour le découpage en zones, le module de navigation met en évidence à l'écran ce découpage en délimitant graphiquement un nombre déterminé de zones connexes. Dans les exemples illustrés par les figures 4, 5 et 6, les zones connexes ont une forme rectangulaire mais d'autres formes sont aussi possibles : triangulaires, trapézoïdale, pentagonale, etc. De même, si l'affichage s'effectue en 3D, les formes des volumes découpés à partir du menu initial sont très variées. Les exemples illustrés montrent un découpage en neuf zones, il est évident que n'importe quel nombre de zones est possible. Quelque soit la variante utilisée pour le découpage en zones, le ou les paramètres utilisés pour réaliser le découpage n'est pas utilisé pour le placement des identificateurs à l'écran. Par exemple, si le découpage s'effectue par l'indice parental associé à chaque document, certains films étant plus violents que d'autres, alors ce critère n'est pas utilisé pour le placement des identificateurs.

Une fois que les zones sont affichées sur l'écran de télévision 2, l'utilisateur peut les sélectionner en positionnant un index à l'intérieur et en appuyant sur la touche « OK » (étape 3.7). A l'étape 3.8, le module de navigation définit ainsi un nouvel ensemble de travail contenant tous les documents se trouvant dans la zone sélectionnée. Le module de navigation affiche alors en plein écran les identificateurs des documents constituant le nouvel ensemble de travail (étape 3.9). Puis, le module reboucle à l'étape 3.4 afin de déterminer le même nombre de zones en prenant en compte les documents constituant le nouvel ensemble de travail. Ainsi, l'utilisateur peut naviguer dans des niveaux d'arborescences où l'ensemble de travail comprend de moins en moins de documents. En fonction du critère de découpage et de sa connaissance sur la façon de positionner les identificateurs à l'écran, l'utilisateur peut orienter sa recherche en sélectionnant une zone et ainsi sélectionner un nouvel ensemble ayant moins de documents.

Au cours de la navigation dans les niveaux d'arborescence, l'utilisateur sélectionne un ensemble contenant un nombre de plus en plus restreint de documents. A un certain niveau, le menu affiché ne contiendra plus que neuf documents qui seront eux-mêmes les représentants de chacune des neuf zones sélectionnables. A ce stade, la sélection d'une zone qui ne contient qu'un document déclenche non plus un nouveau menu de navigation mais la sélection de ce document et donc sa reproduction. Il est donc possible de lancer la reproduction d'un document en sélectionnant la zone. Cette possibilité est particulièrement intéressante lorsque l'on ne dispose pas d'un curseur et d'une souris pour le mouvoir, le curseur pouvant sélectionner un identificateur de document et lancer sa reproduction à partir du menu de navigation. Ainsi, l'utilisateur peut disposer d'un clavier décimal où chacune des neuf touches « 1 » à « 9 » est associée à chacune des neuf zones affichées et lancer la reproduction d'un document uniquement à l'aide de ces neuf touches. De cette façon, il est possible d'afficher uniquement des représentants de zone, de naviguer jusqu'à faire apparaître le dernier niveau de navigation et arriver à ce niveau, de déclencher la reproduction des documents.

L'utilisateur dispose aussi d'une commande de retour permettant de revenir au menu précédent et donc au précédent découpage de zones et au précédent ensemble de documents.

Selon un perfectionnement, la méthode de navigation comporte une étape d'introduction d'une commande de sélection du ou des critères qui sont utilisés pour le découpage en zone. Cette commande est introduite dans un menu de configuration où l'on propose à l'utilisateur la liste des critères utilisables pour le découpage en zones, et l'utilisateur peut ainsi choisir l'une ou l'autre des variantes de découpage qui ont été décrites précédemment, comme par exemple :
- Nombre égal de document par zone, (première variante de réalisation)
- Découpage selon la note de satisfaction,
- Découpage selon l'indice parental,
- Découpage selon la durée de reproduction du document,
- Découpage selon les préférences de l'utilisateur, (troisième variante de réalisation)

L'utilisateur sélectionne un ou plusieurs de ces critères de découpage, et le module de navigation prend en compte le choix de l'utilisateur lors du découpage.

Selon un perfectionnement, la méthode de navigation dispose aussi d'un moyen original pour identifier chacune des zones affichées. En reprenant les exemples des figures 4, 5 et 6, ce moyen consiste à déterminer un document présent dans chacune des neuf zones affichées, ce document devenant le représentant de la zone. Selon ce perfectionnement, le choix du document s'effectue en corrélant les métadonnées descriptives ou « attribut » de chaque document présent dans une zone avec les attributs composant le profil de l'utilisateur. Le module de navigation extrait les métadonnées descriptives de chaque document de la zone et les compare pour le même critère de classification avec les attributs du profil de l'utilisateur. Le document de la zone dont les métadonnées descriptives ou « attributs » présentent la corrélation la plus forte avec les attributs du profil de l'utilisateur (par exemple : corrélation forte entre le thème des documents et les thèmes préférés de l'utilisateur et corrélation forte entre les durées de reproduction des documents les durées de reproduction préférées de l'utilisateur, correspondant à la durée des documents généralement sélectionnés par l'utilisateur), est considéré comme celui représentant la zone. Son titre est alors affiché dans la zone. De cette manière, l'utilisateur perçoit une information supplémentaire associé à chaque zone. Il va de soit que selon le découpage effectué par l'une ou l'autre des trois variantes, les documents présents dans chaque zone varient et donc le représentant de la zone peut changer. C'est pour cela que les titres de documents apparaissant soulignés dans chaque zone ne sont pas les mêmes dans les figures 4, 5 et 6.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'Homme du métier aux modes de réalisation précédemment décrits, sans pour autant sortir du cadre de la présente invention.

## Revendications

1. Procédé de navigation au sein d'un ensemble de documents identifiés par des identificateurs affichés dans un menu de navigation sur un afficheur, chaque document étant associé à une pluralité de valeurs numériques de données descriptives le caractérisant,
ledit procédé comprenant les étapes suivantes :
- détermination (3.1) des valeurs de données descriptives de bas niveau des documents identifiés,
- calcul (3.2) des coordonnées (xi, yi) des identificateurs associés auxdits documents identifiés, à partir d'une partie au moins des valeurs des données descriptives,
- placement (3.3), sur le menu de navigation de l'afficheur, de l'identificateur de chaque document identifié à partir de ses coordonnées calculées,
- réception d'une commande de sélection d'au moins un critère pour découper le menu de navigation de l'afficheur en zones,
- découpage (3.5) complet du menu de navigation de l'afficheur, en fonction du critère sélectionné, en zones contiguës regroupant équitablement les identificateurs des documents de l'ensemble de documents identifiés,
- affichage (3.6) du contour de chaque zone ainsi obtenue,
- après réception (3.7) d'une commande de sélection d'une zone, affichage (3.9) d'un menu de navigation qui ne contient que les identificateurs de ladite zone sélectionnée;
- répétition de l'étape de découpage (3.5) et des étapes d'affichage (3.6, 3.9) à chaque réception d'une commande de sélection d'une zone jusqu'à ce que chacune des zones du menu de navigation affiché contienne au plus un identificateur de document, la réception d'une commande de sélection d'une zone comprenant au plus un identificateur entraînant la reproduction du document identifié par l'identificateur présent dans ladite zone.

2. Procédé de navigation selon la revendication 1, **caractérisé en ce que** les valeurs numériques prises en compte pour déterminer la position des identificateurs dans le menu de navigation sont différentes de celles utilisées par l'étape de découpage en zones.

3. Procédé de navigation selon la revendication 1 ou 2, **caractérisé en ce qu'**il comporte également les étapes suivantes:
- élaboration d'un profil de l'utilisateur consistant à créer une liste d'attributs préférés de l'utilisateur,
- détermination d'une pluralité d'attributs associés à chaque document, incluant ladite partie des valeurs numériques caractérisant ce document,
- dans chacune desdites zones, détermination du document présentant la plus forte corrélation entre les attributs associés à ce document et les attributs dudit profil d'utilisateur,
- identification sur l'afficheur de chaque zone par l'affichage d'un identificateur dudit document présentant la plus forte corrélation.

4. Appareil électronique (1) comprenant :
- un moyen d'affichage (3, 10, 11) d'un menu de navigation comportant des identificateurs de documents, chaque document étant associé à une pluralité de valeurs numériques de données descriptives le caractérisant,
- un moyen de détermination des valeurs de données descriptives de bas niveau des documents identifiés,
- un moyen de calcul des coordonnées (xi, yi) des identificateurs associés auxdits documents identifiés, à partir d'une partie au moins des valeurs des données descriptives,
- un moyen d'introduction d'une commande de sélection d'au moins un critère pour découper le menu de navigation de l'afficheur en zones en fonction du critère sélectionné,
- un moyen de découpage complet (3, 12) du menu de navigation de l'afficheur en zones contiguës regroupant équitablement les identificateurs de documents de l'ensemble des documents identifiés, ledit moyen d'affichage permettant d'afficher le contour de chaque zone ainsi déterminée,
- un moyen d'introduction d'une action d'un utilisateur (7,8) recevant une commande de sélection d'une zone déclenchant l'affichage d'un menu de navigation qui ne contient que les identificateurs de ladite zone sélectionnée, ledit moyen permettant de sélectionner une partie du menu de navigation.
et dans lequel, à chaque réception d'une commande de sélection d'une zone, le découpage complet et l'affichage du contour des zones déterminées sont répétés jusqu'à ce que chacune des zones du menu de navigation affiché contienne au plus un identificateur de document, la réception d'une commande de sélection d'une zone comprenant au plus un identificateur entraînant la reproduction du document identifié par l'identificateur présent dans ladite zone.

5. Appareil électronique selon la revendication 4, **caractérisé en ce que** les valeurs numériques prises en compte pour déterminer la position des identificateurs dans le menu de navigation sont différentes de celles utilisées par l'étape de découpage en zones.

6. Appareil électronique selon la revendication 4 ou 5, **caractérisé en ce qu'**il est également configuré pour :
- élaborer un profil de l'utilisateur consistant à créer une liste d'attributs préférés de l'utilisateur,
- déterminer une pluralité d'attributs associés à chaque document, incluant ladite partie des valeurs numériques caractérisant ce document,
- déterminer, dans chacune desdites zones, le document présentant la plus forte corrélation entre les attributs associés à ce document et les attributs dudit profil d'utilisateur,
- identifier sur l'afficheur chaque zone par l'affichage d'un identificateur dudit document présentant la plus forte corrélation.

## Patentansprüche

1. Verfahren zur Navigation innerhalb einer Reihe von Dokumenten, die durch Kennungen identifiziert werden, die in einem Navigationsmenü auf einem Anzeigegerät angezeigt werden, wobei jedes Dokument mit einer Vielzahl von Zahlenwerten von beschreibenden Daten, die es kennzeichnen, verbunden ist,
wobei das besagte Verfahren die folgenden Schritte umfasst:
- Bestimmung (3.1) der Werte von beschreibenden Daten von niedriger Stufe der identifizierten Dokumente,
- Berechnung (3.2) der Koordinaten (xi, yi) der mit den besagten identifizierten Dokumenten verbundenen Kennungen anhand eines Teils mindestens der Werte der beschreibenden Daten,
- Platzierung (3.3), auf dem Navigationsmenü des Anzeigegeräts, der Kennung von jedem Dokument, das anhand seiner berechneten Koordinaten identifiziert wurde,
- Empfang eines Befehls zur Auswahl von mindestens einem Kriterium zum Zuschneiden des Navigationsmenüs des Anzeigegeräts in Zonen,
- Vollständiges Zuschneiden (3.5) des Navigationsmenüs des Anzeigegeräts entsprechend dem ausgewählten Kriterium in aneinandergrenzende Zonen, die die Kennungen der Dokumente der Reihe von identifizierten Dokumenten gleichmäßig gruppieren,
- Anzeige (3.6) des Umrisses von jeder so erhaltenen Zone,
- nach Empfang (3.7) eines Befehls zur Auswahl einer Zone, Anzeige (3.9) eines Navigationsmenüs, das nur die Kennungen der besagten ausgewählten Zone enthält,
- Wiederholung des Schritts zum Zuschneiden (3.5) und der Schritte zum Anzeigen (3.6, 3.9) bei jedem Empfang eines Befehls zur Auswahl einer Zone, bis jede der Zonen des angezeigten Navigationsmenüs höchstens eine Dokumentkennung enthält, wobei der Empfang eines Befehls zur Auswahl einer Zone, die höchstens eine Kennung umfasst, die Reproduktion des identifizierten Dokuments durch die in der besagten Zone vorhandene Kennung zur Folge hat.

2. Verfahren zur Navigation nach Anspruch 1, **dadurch gekennzeichnet, dass** die Zahlenwerte, die für die Bestimmung der Position der Kennungen in dem Navigationsmenü berücksichtigt werden, sich von jenen unterscheiden, die durch den Schritt des Zuschneidens in Zonen verwendet werden.

3. Verfahren zur Navigation nach Anspruch 1 oder 2, **dadurch gekennzeichnet, dass** es ebenfalls die folgenden Schritte umfasst:
- Ausarbeitung eines Profils des Nutzers, darin bestehend, eine Liste von bevorzugten Attributen des Nutzers zu erstellen,
- Bestimmung einer Vielzahl von Attributen, die mit jedem Dokument verbunden sind, unter Einbeziehung des besagten Teils der Zahlenwerte, die dieses Dokument kennzeichnen,
- in jeder der besagten Zonen Bestimmung des Dokuments, das die stärkste Korrelation zwischen den mit diesem Dokument verbundenen Attributen und den Attributen des besagten Nutzerprofils aufweist,
- Identifizierung jeder Zone auf dem Anzeigegerät durch die Anzeige einer Kennung des besagten Dokuments, das die stärkste Korrelation aufweist.

4. Elektronisches Gerät (1), das umfasst:
- ein Mittel zur Anzeige (3, 10, 11) eines Navigationsmenüs, das Kennungen von Dokumenten beinhaltet, wobei jedes Dokument mit einer Vielzahl von Zahlenwerten von beschreibenden Daten, die es kennzeichnen, verbunden ist,
- ein Mittel zur Bestimmung der Werte von beschreibenden Daten von niedriger Stufe der identifizierten Dokumente,
- ein Mittel zur Berechnung der Koordinaten (xi, yi) der mit den besagten identifizierten Dokumenten verbundenen Kennungen anhand eines Teils mindestens der Werte der beschreibenden Daten,
- ein Mittel zur Eingabe eines Befehls zur Auswahl von mindestens einem Kriterium zum Zuschneiden des Navigationsmenüs des Anzeigegerätes in Zonen entsprechend dem ausgewählten Kriterium,
- ein Mittel zum kompletten Zuschneiden (3, 12) des Navigationsmenüs des Anzeigegeräts in aneinandergrenzende Zonen, die die Kennungen von Dokumenten der Reihe der identifizierten Dokumente gleichmäßig gruppieren, wobei das besagte Mittel zur Anzeige es ermöglicht, den Umriss von jeder so bestimmten Zone anzuzeigen,
- ein Mittel zur Eingabe einer Aktion eines Nutzers (7, 8), der einen Befehl zur Auswahl einer Zone empfängt, wodurch die Anzeige eines Navigationsmenüs ausgelöst wird, welches nur die Kennungen der besagten ausgewählten Zone enthält, wobei das besagte Mittel es ermöglicht, einen Teil des Navigationsmenüs auszuwählen,
und wobei bei jedem Empfang eines Befehls zur Auswahl einer Zone das vollständige Zuschneiden und die Anzeige des Umrisses der bestimmten Zonen wiederholt werden, bis jede der Zonen des angezeigten Navigationsmenüs höchstens eine Dokumentkennung enthält, wobei der Empfang eines Befehls zur Auswahl einer Zone, die höchstens eine Kennung umfasst, die Reproduktion des identifizierten Dokuments durch die in der besagten Zone vorhandene Kennung zur Folge hat.

5. Elektronisches Gerät nach Anspruch 4, **dadurch gekennzeichnet, dass** die Zahlenwerte, die zur Bestimmung der Position der Kennungen in dem Navigationsmenü berücksichtigt werden, sich von jenen unterscheiden, die durch den Schritt des Zuschneidens in Zonen verwendet werden.

6. Elektronisches Gerät nach Anspruch 4 oder 5, **dadurch gekennzeichnet, dass** es ebenfalls konfiguriert wird zur:
- Ausarbeitung eines Profils des Nutzers, darin bestehend, eine Liste von bevorzugten Attributen des Nutzers zu erstellen,
- Bestimmung einer Vielzahl von Attributen, die mit jedem Dokument verbunden sind, unter Einbeziehung des besagten Teils der dieses Dokument kennzeichnenden Zahlenwerte,
- Bestimmung, in jeder der besagten Zonen, des Dokuments, das die stärkste Korrelation zwischen den mit diesem Dokument verbundenen Attributen und den Attributen des besagten Nutzerprofils aufweist,
- Identifizierung jeder Zone auf dem Anzeigegerät durch die Anzeige einer Kennung des besagten Dokuments, das die stärkste Korrelation aufweist.

## Claims

1. Method for navigating within a set of documents identified by identifiers displayed in a navigation menu on a display, each document being associated with a plurality of numerical values of descriptive data characterising it, said method comprising the following steps:
- determination (3.1) of the values of low level descriptive data of the documents identified.
- calculation (3.2) of coordinates (xi, yi) of the identifiers associated with said identified documents, from one part at least of the values of the descriptive data,
- placement (3.3), on the navigation menu of the display, of the identifier of each document identified from its calculated coordinates,
- reception of a selection command of at least one criterion to split the navigation menu of the display into zones,
- full splitting (3.5) of the navigation menu of the display, according to the selected criterion, into contiguous zones equally grouping the identifiers of the documents of all the identified documents,
- display (3.6) of the contour of each zone thus obtained,
- after reception (3.7) of a zone selection command, display (3.9) of a navigation menu that only contains the identifiers of said selected zone,
- repetition of the splitting step (3.5) and display steps (3.6, 3.9) at each reception of a zone selection command until each of the zones of the displayed navigation menu contain at the most one document identifier, the reception of a zone selection command comprising at the most one identifier driving the reproduction of the document identified by the identifier present in said zone.

2. Navigation method according to claim 1, **characterised in that** the numerical values taken into account to determine the position of the identifiers in the navigation menu are different from the ones used by the zone splitting step.

3. Navigation method according to claim 1 or 2, **characterised in that** it also comprises the following steps:
- generation of a user profile consisting of creating a list of preferred attributes of the user,
- determination of a plurality of attributes associated with each document, including said part of the numerical values characterising this document,
- in each of said zones, determination of the document presenting the strongest correlation between the attributes associated with this document and the attributes of said user profile,
- identification on the display of each zone by the display of an identifier of said document presenting the strongest correlation.

4. Electronic device (1) comprising:
- a means for displaying (3, 10, 11) a navigation menu comprising document identifiers, each document being associated with a plurality of numerical values of descriptive data characterising it,
- a means for determining values of low level descriptive data of the documents identified,
- a means for calculating coordinates (xi, yi) of the identifiers associated with said identified documents, from one part at least of the values of the descriptive data,
- a means for introducing a selection command of at least one criterion to split the navigation menu of the display into zones according to the criterion selected,
- a means for fully splitting (3, 12) the navigation menu of the display into contiguous zones equally grouping the document identifiers of all the identified documents, said display means enabling the display of the contour of each zone thus determined,
- a means for introducing an action of a user (7, 8) receiving a selection command of a zone triggering the display of a navigation menu that only contains the identifiers of said selected zone, said means enabling a part of the navigation menu to be selected.
and wherein, upon each reception of a zone selection command, the full splitting and the display of the contour of the determined zones are repeated until each of the zones of the displayed navigation menu contain at the most one document identifier, the reception of a selection command of a zone comprising at the most one identifier driving the reproduction of the document identified by the identifier present in said zone.

5. Electronic device according to claim 4, **characterised in that** the numerical values taken into account to determine the position of the identifiers in the navigation menu are different from the ones used by the zone splitting step.

6. Electronic device according to claim 4 or 5, **characterised in that** it is also configured to:
- generate a user profile consisting of creating a list of preferred attributes of the user,
- determine a plurality of attributes associated with each document, including said part of the numerical values characterising this document, determine, in each of said zones, the document presenting the strongest correlation between the attributes associated with this document and the attributes of said user profile,
- identify on the display each zone by the display of an identifier of said document presenting the strongest correlation.
